# EUROPÄISCHE PATENTANMELDUNG

(11) **EP 1 528 185 A2**
(43) Veröffentlichungstag der Anmeldung: **04.05.2005**
(21) Anmeldenummer: 04025475.7
(22) Anmeldetag: 27.10.2004
(51) Int. Cl.: E04H 4/12

(54) **Modulare Schwimmbadregelvorrichtung**

(30) Priorität: 03.11.2003 DE 10351551
(71) Anmelder: edus Systemtechnik GmbH, 88662 Überlingen (DE)
(72) Erfinder: Schulz, Ulrich, 88356 Ostrach (DE); Dreier, Erich, 88662 Überlingen (DE)
(74) Vertreter: Heyerhoff, Markus

(57) **Zusammenfassung**

Die Erfindung geht aus von einer modularen Schwimmbadregelvorrichtung, insbesondere zum Messen und Regeln von wenigstens einer Kenngröße (pH) für eine Wasserqualität eines Schwimmbads.

Um eine gattungsgemäße Vorrichtung mit verbesserten Eigenschaften hinsichtlich eines Wartungs- und Betriebskomforts bereitzustellen, wird vorgeschlagen, dass die modulare Schwimmbadregelvorrichtung wenigstens eine Telekommunikationseinheit (10, 10') umfasst.

## Beschreibung

### Stand der Technik

Die Erfindung geht aus von einer modularen Schwimmbadregelvorrichtung nach dem Oberbegriff des Anspruchs 1.

Es sind modulare Schwimmbadregelvorrichtungen zum Messen und Regeln von Kenngrößen für eine Wasserqualität des Schwimmbads bekannt. Dabei weisen die gattungsgemäßen Schwimmbadregelvorrichtungen austauschbare und/oder nachrüstbare Module zum Messen und/oder Regeln z. B. eines pH-Werts oder einer Konzentration von Chemikalien mit desinfizierender Wirkung, wie zum Beispiel Chlor, Brom oder Sauerstoff, und von Flockungsmitteln auf. Ferner können die modularen Mess- und Regelgeräte mit Modulen, die Dosierpumpen und/oder Dosierventile für die oben genannten Chemikalien und/oder für Säure oder Lauge umfassen, ausgestattet werden. Durch eine geeignete Wahl der Module sind gattungsgemäße modulare Schwimmbadregelvorrichtungen für verschiedene Schwimmbadgrößen und Schwimmbadfunktionen einsetzbar, zum Beispiel auch für Whirlpools oder kleine Planschbecken.

Die Aufgabe der Erfindung besteht insbesondere darin, eine gattungsgemäße Vorrichtung mit verbesserten Eigenschaften hinsichtlich eines Wartungs- und Betriebskomforts bereitzustellen.

Die Aufgabe wird erfindungsgemäß durch die Merkmale des Patentanspruchs 1 und der unabhängigen Nebenansprüche gelöst, während vorteilhafte Ausgestaltungen und Weiterbildungen der Erfindung den Unteransprüchen entnommen werden können.

### Vorteile der Erfindung

Die Erfindung geht aus von einer modularen Schwimmbadregelvorrichtung, insbesondere zum Messen und Regeln von wenigstens einer Kenngröße für eine Wasserqualität eines Schwimmbads.

Es wird vorgeschlagen, dass die modulare Schwimmbadregelvorrichtung wenigstens eine Telekommunikationseinheit umfasst. Dadurch kann vorteilhaft erreicht werden, dass Wartungs- und Betriebsfunktionen vorteilhaft komfortabel aus der Distanz erledigt werden können und dass dadurch Wege eines Bedieners, z. B. eines Besitzers, eines Schwimmbadtechnikers oder eines Schwimmbadpflegers, eingespart werden können. Dies kann insbesondere dann große Zeit- und Kosteneinsparpotentiale erschließen, wenn das Schwimmbad in großer Entfernung von einem Bediener liegt, wie dies im Beispiel eines Swimmingpools eines Ferienhauses der Fall sein kann. Zudem kann vorteilhaft erreicht werden, dass Betriebsgrößen der modularen Schwimmbadregelvorrichtung aus der Distanz abrufbar sind oder zu einer Kenntnisnahme oder einer Archivierung an den Bediener gesendet werden. Dabei sind als Telekommunikationseinheit Modems, Funkgeräte, Kommunikationsschnittstellen oder andere, dem Fachmann als sinnvoll erscheinende Einheiten denkbar. Die Telekommunikationseinheit kann wie eine Messeinheit in die modulare Schwimmbadregelvorrichtung integriert sein oder von dieser getrennt sein.

Ist die Telekommunikationseinheit als Modul ausgebildet, also insbesondere nachrüstbar, kann vorteilhaft eine hohe Flexibilität der modularen Schwimmbadregelvorrichtung erreicht werden. Es sind auch Ausgestaltungen der Erfindung denkbar, in denen die Telekommunikationseinheit zumindest Teil einer zentralen Kommunikationseinheit ist, die auch von auf das Schwimmbad bezogenen Betriebs- und Wartungsaufgaben unabhängige Kommunikationsaufgaben erfüllt.

Eine besonders komfortable Inbetriebnahme des Telekommunikationsmoduls kann erreicht werden, wenn die modulare Schwimmbadregelvorrichtung eine Recheneinheit, die zur zumindest teilautomatisierten Konfiguration bei einem Anbringen des Telekommunikationsmoduls vorgesehen ist, umfasst. Dabei soll unter vorgesehen in diesem Zusammenhang auch ausgelegt und ausgestattet verstanden werden. Die Recheneinheit kann von der modularen Schwimmbadregelvorrichtung getrennt oder in diese integriert sein.

Ist über die Telekommunikationseinheit wenigstens ein Messwert abfragbar, kann sich der Bediener vorteilhaft aus der Distanz ein Bild von einem Zustand des Schwimmbads oder der Regelvorrichtung machen. Dabei kann der Messwert z. B. eine Kenngröße für einen Zustand von im Schwimmbad enthaltenen Wassers, für einen Chemikalienvorrat oder für einen Betriebszustand der modularen Schwimmbadregelvorrichtung sein, die über eine Datenleitung an die Telekommunikationseinheit übermittelt und bei Eingang eines entsprechenden Abfragesignals an einen Bediener versendet wird.

Ferner kann ein Weg des Bedieners zur modularen Schwimmbadregelvorrichtung vermieden werden, wenn über die Telekommunikationseinheit wenigstens eine Betriebsgröße einstellbar ist. Dazu kann vorteilhaft die Telekommunikationseinheit über eine Signalleitung mit einer Steuer- und/oder Regeleinheit der modularen Schwimmbadregelvorrichtung verbunden sein, über welche die Telekommunikationseinheit ein durch ein empfangenes Signal ausgelöstes Steuersignal an die Steuer- und/oder Regeleinheit übermitteln kann. Dabei kann besonders vorteilhaft über die Telekommunikationseinheit ein Betriebsmodus wählbar sein bzw. das Steuersignal einen Schaltvorgang auslösen. Insbesondere durch eine Möglichkeit zum Einleiten eines Einoder Ausschaltvorgangs oder eines Umschaltvorgangs von einem Betriebsmodus in einen Standby-Modus oder umgekehrt kann ein vorteilhafter Komfortgewinn für den Bediener erreicht werden.

Weist die modulare Schwimmbadregelvorrichtung eine Speichereinheit auf, in der in wenigstens zwei Sprachen angelegte Datensätze gespeichert sind, kann vorteilhaft ein Umschalten zwischen Sprachen und damit eine vereinfachte Bedienung und ein zusätzlicher Komfortgewinn für den Bediener erreicht werden. Dabei kann die Speichereinheit sowohl in die Telekommunikationseinheit integriert sein als auch einstückig mit einer weiteren Speichereinheit, etwa einer Speichereinheit der Recheneinheit, ausgeführt sein.

Weist die modulare Schwimmbadregelvorrichtung eine Rechnereinheit auf, die eine Warnfunktion auslöst, wenn eine Kenngröße wenigstens einen Grenzwert über- oder unterschreitet, kann vorteilhaft erreicht werden, dass dem Bediener die Grenzwertüberschreitung oder -unterschreitung zur Kenntnis gelangt und dass er dadurch geeignete Maßnahmen einleiten kann.

Eine vorteilhaft sichere Warnfunktion kann erreicht werden, wenn die modulare Schwimmbadregelvorrichtung einen Zeitgeber zum Bestimmen von Zeitintervallen umfasst, in denen bei ausgelöster Warnfunktion die Telekommunikationseinheit Warnmeldungen versendet. Es kann vermieden werden, dass die Warnung den Bediener nicht erreicht, weil er zum Beispiel aus technischen Gründen eine erste Warnmeldung nicht empfangen hat. Dabei kann besonders vorteilhaft die Warnfunktion durch ein entsprechendes Signal des Bedieners ausschaltbar sein, das gleichzeitig den Empfang einer Warnmeldung bestätigt.

Ein besonders schnelles und konzertiertes Einleiten von Maßnahmen kann erreicht werden, wenn die modulare Schwimmbadregelvorrichtung eine Speichereinheit umfasst, die zum Speichern von wenigstens zwei Adressen oder Telefonnummern vorgesehen ist. Status- oder Warnmeldungen können unmittelbar aufeinanderfolgend an die Adressen und/oder Telefonnummern versandt werden und eine Wahrscheinlichkeit, dass die Meldung wenigstens einen Bediener erreicht, kann vorteilhaft vergrößert werden. Es kann zum Beispiel eine Nachricht an einen Besitzer des Schwimmbads und eine Nachricht an einen Schwimmbadtechniker oder Schwimmbadpfleger versandt werden. Zudem kann die Schwimmbadregelvorrichtung vorteilhaft einen Empfänger abhängig von einem Inhalt der Meldung bestimmen.

Eine besonders sichere und komfortable Übermittlung von Informationen kann erreicht werden, wenn die Telekommunikationseinheit zum Senden und Empfangen von SMS vorgesehen ist. Dazu kann die Telekommunikationseinheit ein für das "Global-Messaging-System" (GSM) taugliches Modem umfassen. SMS können vorteilhaft versendet und empfangen werden, wenn die Kapazitäten eines GSM-Mobilfunknetzes für Sprach- oder DATA-Anrufe belegt sind oder wenn eine Netzabdeckung für solche Anrufe zu schwach ist. Zudem werden SMS-Nachrichten von einem Betreiber des Mobilfunknetzes zwischengespeichert und dem Empfänger zu einem späteren Zeitpunkt zugestellt, sollte dieser aus technischen oder anderen Gründen zu einem Sendezeitpunkt nicht erreichbar sein.

Umfasst die modulare Schwimmbadregelvorrichtung wenigstens eine Sensoreinheit, die zur Erfassung einer Kenngröße eines Umwälzsystems vorgesehen ist, kann vorteilhaft sichergestellt werden, dass ein Einleiten von Chemikalien nur dann erfolgt, wenn das Umwälzsystem in Betrieb ist. Zudem kann ermöglicht werden, dass die Kenngröße über die Telekommunikationseinheit abfragbar ist und dass sich der Bediener auf diese Weise von über einen Zustand des Umwälzsystems informieren kann.

Umfasst die modulare Schwimmbadregelvorrichtung wenigstens eine Sensoreinheit, die zur Erfassung einer Kenngröße eines Chemikalienvorrats vorgesehen ist, kann vorteilhaft erreicht werden, dass diese Kenngröße über die Telekommunikationseinheit abfragbar ist. Zudem kann eine Warnfunktion aktiviert werden, wenn ein oder mehrere Bestandteile des Chemikalienvorrats zur Neige gehen und entsprechende Maßnahmen, wie zum Beispiel Meldungen an den Bediener oder automatische Nachbestellungen, können eingeleitet werden.

Ist die Telekommunikationseinheit zum Übermitteln von Bildinformationen ausgelegt, kann vorteilhaft erreicht werden, dass der Bediener einen visuellen Eindruck des Schwimmbads gewinnt und so auf besonders komfortable Weise eine Entscheidungsgrundlage für eine Auswahl anstehender Wartungsaufgaben zur Verfügung gestellt bekommt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine modulare Schwimmbadregelvorrichtung mit einer Telekommunikationseinheit,
- Fig. 2: ein Ablaufdiagramm zur teilautomatisierten Konfiguration bei einem Anbringen eines Telekommunikationsmoduls,
- Fig. 3: ein weiteres Ablaufdiagramm zur automatisierten Konfiguration der modularen Schwimmbadregelvorrichtung aus Fig. 1,
- Fig. 4: ein Ablaufdiagramm zu einer Überprüfung eines pH-Werts und einer Umwälzeinheit und zur Aktivierung einer Warnfunktion und
- Fig. 5: eine alternative Schwimmbadregelvorrichtung mit einer integrierten Telekommunikationseinheit.

### Beschreibung der Ausführungsbeispiele

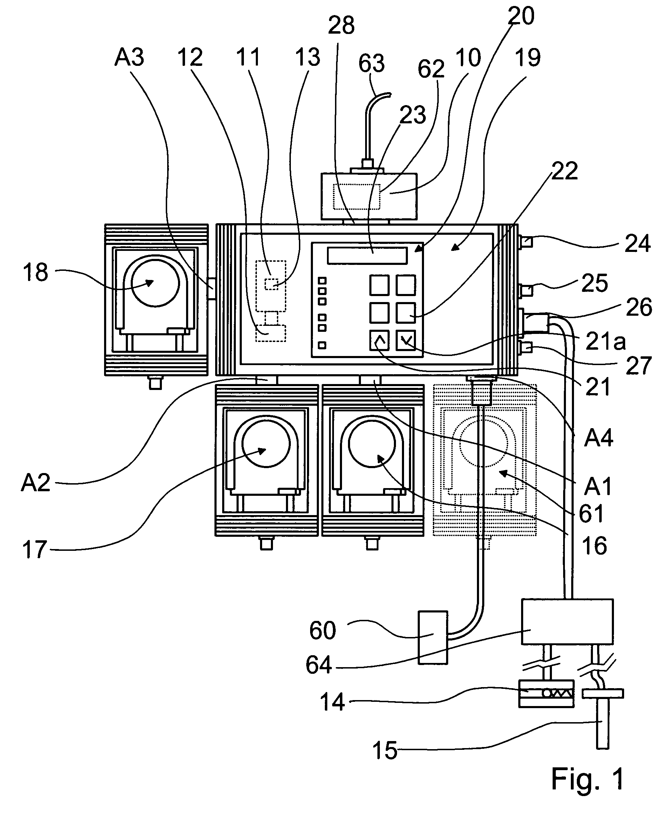

Figur 1 zeigt eine modulare Schwimmbadregelvorrichtung zum Messen und Regeln mehrerer von Kenngrößen für eine Wasserqualität des Schwimmbads, zum Beispiel eines pH-Werts pH und eines Chlorgehalts, mit einer als in eine Schnittstelle 28 eingestecktes Modul ausgebildeten Telekommunikationseinheit 10 sowie mit drei angeschlossenen, als einsteckbare Module ausgebildeten Dosierpumpen 16, 17, 18. Die erste Dosierpumpe 16 an einem ersten Ausgang A1 ist zum Dosieren einer Säure vorgesehen, könnte aber aufgrund ihrer Ausstattung auch zum Dosieren einer Lauge verwendet werden. Die zweite Dosierpumpe 17 an einem zweiten Ausgang A2 ist zum Dosieren von Chlor Cl oder Wasserstoffperoxid vorgesehen, während die dritte Dosierpumpe 18 an einem dritten Ausgang A3 zum Dosieren von Lauge vorgesehen ist. An einem vierten Ausgang A4 ist ein als Magnetventil ausgebildetes Brom-Modul 60 angeschlossen. Es kann an Stelle des Brom-Moduls 60 auch eine gestrichelt dargestellte Flockungsmittelpumpe 61 angeschlossen werden. Ein Zentralmodul 19 umfasst eine Recheneinheit 11 mit integriertem Zeitgeber 13 sowie eine Speichereinheit 12 und ein Bedienfeld 20, welches Cursortasten 21, 21a, eine Eingabetaste 22 und ein Display 23 umfasst. Zudem sind am Zentralmodul 19 mehrere Messanschlüsse 24, 25, 26 und ein Videoanschluss 27 angeordnet. Am ersten Messanschluss 24 kann eine Redox-Messsonde angeschlossen werden, während der zweite Messanschluss 25 zum Anschluss einer pH-Messsonde vorgesehen ist. Der Messanschluss 26 ist ein Dateneingang, an dem ein Messmodul 64 angeschlossen ist, das selbst modular durch verschiedenartige Sensoreinheiten, wie in diesem Beispiel durch eine Sensoreinheit 14 für eine Strömungsgeschwindigkeit U in einem Umwälzsystem, die eine Kenngröße für ein Funktionieren des Umwälzsystems darstellt, und durch eine Sensoreinheit 15 für eine Füllhöhe, die eine Kenngröße für einen Chemikalienvorrat, zum Beispiel für einen Chlorvorrat, darstellt.

Die Telekommunikationseinheit 10 umfasst ein GSM-Modem 62 und ein Antennenkabel 63 und ist hinsichtlich einer Datenkapazität zum Versenden und Empfangen von SMS-Kurznachrichten und MMS-Kurznachrichten mit Bildinformation ausgelegt. Ist am Videoanschluss 27 eine Kamera angeschlossen, kann der Bediener per SMS ein Bild dieser Kamera anfordern. Die Telekommunikationseinheit 10 liest die angeforderten Bildinformationen über eine nicht dargestellte Datenverbindung aus der Speichereinheit 12 und versendet eine MMS mit den angeforderten Bildinformationen an den Bediener. Außer Bildinformationen kann der Bediener über die Telekommunikationseinheit 10 auch andere, zum Beispiel von den Sensoreinheiten 14, 15 erfasste, Informationen aus der Speichereinheit 12 abrufen. Auch ein direktes Abfragen der Sensoreinheiten 14, 15 wäre denkbar.

Zudem kann die Telekommunikationseinheit 10 SMS-Kurzmitteilungen zur Einstellung von Betriebsgrößen empfangen, und zwar kann der Bediener in seiner SMS-Kurznachricht beispielsweise einen Soll-pH-Wert pH' angeben, auf den die Schwimmbadregelvorrichtung den Ist-pH-Wert pH dann regelt.

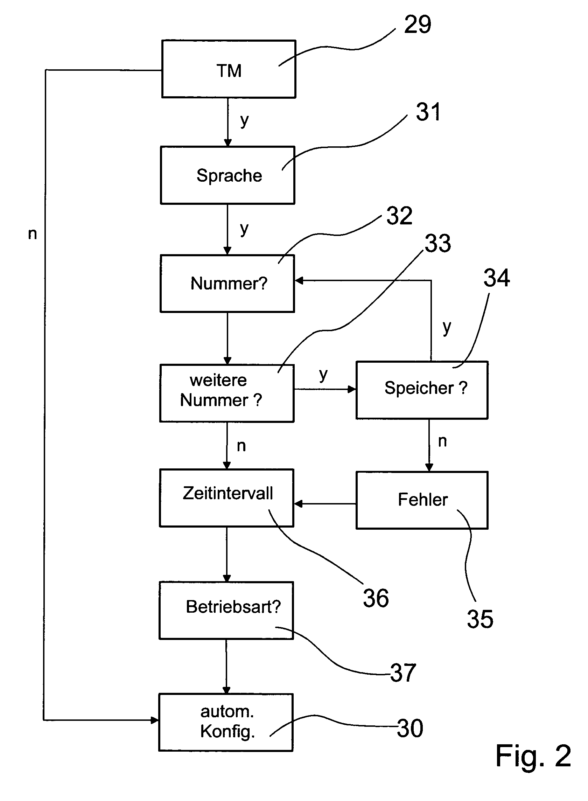

Die modulare Schwimmbadregelvorrichtung ist zur teilautomatisierten Konfiguration beim Anbringen der Telekommunikationseinheit 10 vorgesehen. Figur 2 zeigt skizzenhaft ein Ablaufdiagramm zu dem zugehörigen Konfigurationsprogramm. In einer ersten Abfrage 29 wird ein Zustand eines Kontakts abgefragt, der beim Einstecken der Telekommunikationseinheit 10 in die Schnittstelle 28 geschlossen wird. Ist der Kontakt geöffnet (n), wird eine automatische Konfiguration 30 gestartet. Ist der Kontakt geschlossen (y), kann ein Benutzer in einer Sprachwahl 31 über die Cursortasten 21, 21a und die Eingabetaste 22, geführt von im Display 23 erscheinenden Anweisungen eine Sprache auswählen. In einem Nummerneingabeschritt 32 wird der Bediener anschließend in der ausgewählten Sprache über Anweisungssätze, die im Display 23 erscheinen und die in verschiedenen Sprachen in der Speichereinheit 12 abgelegt sind, angewiesen, eine Telefonnummer einzugeben, an welche die Telekommunikationseinheit 10 Warn- und Statusnachrichten senden soll. In einem Abfrageschritt 33 wird der Bediener gefragt, ob er weitere Nummern eingeben möchte. Bei negativer Antwort (n) springt das Konfigurationsprogramm zu einem Abfrageschritt 36, in dem der Benutzer angewiesen wird, ein Zeitintervall I einzugeben, das zeitliche Abstände zwischen Warnmeldungen bestimmt. Bei positiver Antwort (y) wird in einer internen Abfrage 34 geprüft, ob noch genügend Speicherkapazitäten für die Aufnahme einer neuen Nummer vorhanden sind.

Falls dies der Fall ist (y), springt das Konfigurationsprogramm zurück zum Nummerneingabeschritt 32, falls nicht, gibt das Programm eine Fehlermeldung 35 aus und springt zum Abfrageschritt 36. In einem letzten Abfrageschritt 37 kann der Bediener nach Maßgabe der Ausstattung und eines Chemikalienvorrats eine Betriebsart auswählen, bevor das Konfigurationsprogramm die automatische Konfiguration 30 startet. Eine im Abfrageschritt 37 getroffene Wahl kann durch den Bediener jederzeit durch Senden einer SMS mit einem entsprechenden Inhalt an die Telekommunikationseinheit 10 verändert werden. Es wären auch Ausgestaltungen der Erfindung denkbar, in denen das Konfigurationsprogramm zur Sprachwahl 31 zurückspringt und es auf diese Weise ermöglicht wird, jeder Nummer eine Sprache zuzuordnen, so dass verschiedene Empfänger Nachrichten in unterschiedlichen Sprachen erhalten können.

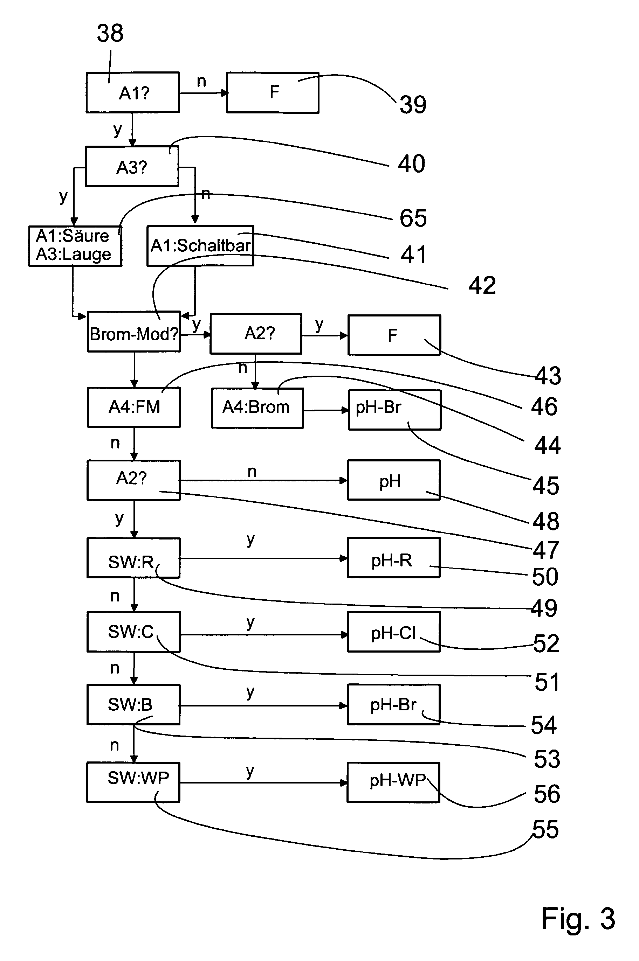

Figur 3 zeigt ein Ablaufdiagramm zur automatischen Konfiguration 30. In einem ersten Abfrageschritt 38 wird über einen Kontakt abgefragt, ob am ersten Ausgang A1 die Dosierpumpe 16 angeschlossen ist. Ist dies nicht der Fall (n), erscheint eine Fehlermeldung 39. Ansonsten wird in einem zweiten Abfrageschritt 40 über einen Kontakt abgefragt, ob am dritten Ausgang A3 eine Dosierpumpe 18 angeschlossen ist. Ist dies nicht der Fall, wird in einem Schritt 41 eine Software so konfiguriert, dass die Dosierpumpe 16 schaltbar für Säure oder Lauge einsetzbar ist. Welche der beiden Einsatzmöglichkeiten ausgewählt wird, richtet sich nach der Eingabe des Bedieners im Abfrageschritt 37. Wird eine Dosierpumpe 18 gefunden, wird in einem Schritt 65 die Recheneinheit 11 zur Verwendung der Dosierpumpe 16 für Säure und Dosierpumpe 18 für Lauge konfiguriert.

Anschließend wird in einer Instanz 42 überprüft, ob am Ausgang 4 ein Brom-Modul 60 vorliegt. Ist dies der Fall, wird, falls der Ausgang 2 mit einer Dosierpumpe 17 für Chlor oder Wasserstoffperoxid besetzt ist, eine Fehlermeldung 43 ausgegeben, die vor dem Einsatz zweier verschiedener Desinfektionsmittel warnt. Ansonsten wird in einem Schritt 44 das Brom-Modul 60 am vierten Ausgang A4 zur Brom-Dosierung konfiguriert und die modulare Schwimmbadregelvorrichtung in einem Schaltschritt 45 in einen pH-Brom-Betriebsmodus geschaltet, in dem sie pH- und Redox-Messungen durchführt und den pH-Wert pH über die Dosierpumpe 16 und die Dosierpumpe 18 regelt, während über das Brom-Modul 60 am Ausgang 4 zur Desinfektion Brom dosiert wird.

Wird in der Instanz 42 kein Brom-Modul 60 gefunden, wird in einem Schritt 46 der vierte Ausgang A4 zur Dosierung von Flockungsmitteln konfiguriert und anschließend in einem Abfrageschritt 47 abgefragt, ab am zweiten Ausgang A2 eine Dosierpumpe 17 angeordnet ist. Ist dies nicht der Fall, wird in einem Schaltschritt 48, die modulare Schwimmbadregelvorrichtung in einen pH-Betriebsmodus geschaltet, in dem der pH-Wert pH des Schwimmbads geregelt und Flockungsmittel FM dosiert wird.

Ist der zweite Ausgang A2 besetzt, muss anhand der im Abfrageschritt 37 eingestellten Softwarekonfiguration entschieden werden, welche Chemikalie über die Dosierpumpe 17 am zweiten Ausgang A2 dosiert werden soll.

In einer ersten Instanz 49 wird abgefragt, ob die Software für einen pH-Redox-Betriebsmodus konfiguriert ist. Ist dies der Fall, wird in einem Schaltschritt 50 in diesen Betriebsmodus geschaltet, in dem über den ersten Ausgang A1 und über den dritten Ausgang A3 der pH-Wert pH geregelt wird, über den zweiten Ausgang A2 ein Desinfektionsmittel und über den vierten Ausgang A4 Flockungsmittel dosiert wird.

Ist die Software nicht für einen pH-Redox-Betriebsmodus konfiguriert, wird in einer Instanz 51 abgefragt, ob die Software für einen pH-Chlor-Betriebsmodus bzw. eine direkte Chlor-Messung konfiguriert ist. Ist dies der Fall, wird in einem Schaltschritt 52 in diesen Betriebsmodus geschaltet, in dem über den ersten Ausgang A1 und über den dritten Ausgang A3 der pH-Wert pH geregelt wird, über den zweiten Ausgang A2 Chlor und über den vierten Ausgang A4 Flockungsmittel dosiert wird.

Ist die Software nicht für einen pH-Chlor-Betriebsmodus konfiguriert, wird in einer Instanz 53 abgefragt, ob die Software für einen pH-Brom-Betriebsmodus bzw. eine direkte Brom-Messung konfiguriert ist. Ist dies der Fall, wird in einem Schaltschritt 54 in diesen Betriebsmodus geschaltet, in dem über den ersten Ausgang A1 und über den dritten Ausgang A3 der pH-Wert pH geregelt wird, über den zweiten Ausgang A2 Brom und über den vierten Ausgang A4 Flockungsmittel dosiert wird.

Ist die Software nicht für einen pH-Brom-Betriebsmodus konfiguriert, wird in einer Instanz 55 abgefragt, ob die Software für einen pH-Wasserstoffperoxid-Betriebsmodus konfiguriert ist. Ist dies der Fall, wird in einem Schaltschritt 56 in diesen Betriebsmodus geschaltet, in dem über den ersten Ausgang A1 und über den dritten Ausgang A3 der pH-Wert pH geregelt wird, über den zweiten Ausgang A2 Wasserstoffperoxid und über den vierten Ausgang A4 Flockungsmittel dosiert wird.

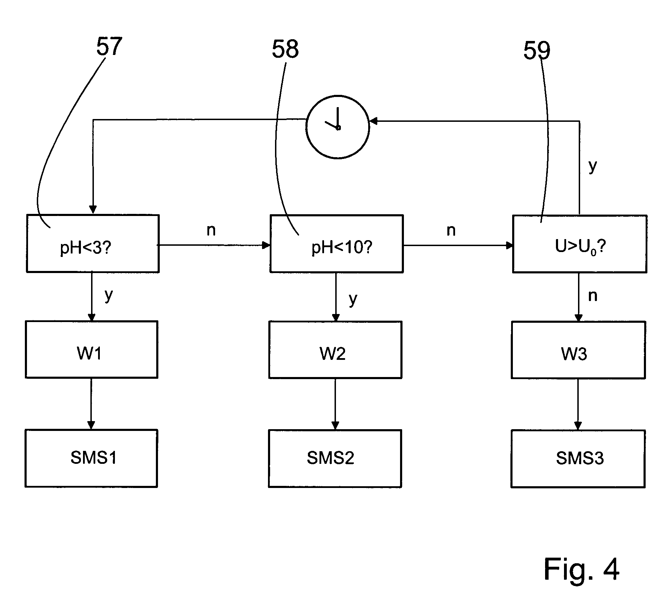

Figur 4 zeigt ein Ablaufdiagramm zu einer Überprüfung eines pH-Werts und einer Umwälzeinheit und zur Aktivierung einer Warnfunktion. In einem ersten Abfrageschritt 57 wird abgefragt, ob ein sensierter pH-Wert pH kleiner als 3 ist. Ist dies der Fall, wird eine erste Warnfunktion W1 aktiviert und in Zeitintervallen I eine Kurznachricht SMS1 in der Sprachwahl 31 eingestellten Sprache an die im Nummerneingabeschritt 32 eingegebenen Telefonnummern verschickt. Der Inhalt der Kurznachricht SMS1 ist in verschiedenen Sprachen in der Speichereinheit 12 abgelegt und teilt den Empfängern mit, dass das Wasser des Schwimmbads übersäuert ist. Die Warnfunktion W1 kann vom Bediener durch eine Antwort-SMS deaktiviert werden. Ist der sensierte pH-Wert pH größer als 3, wird in einem zweiten Abfrageschritt 58 überprüft, ob der pH-Wert pH größer als 10 ist. Ist dies der Fall, wird eine zur Warnfunktion W1 analoge Warnfunktion W2 aktiviert und in Zeitintervallen I eine Kurznachricht SMS2 an die eingespeicherten Telefonnummern verschickt. Übersteigt der pH-Wert den Wert 10 nicht, wird in einem dritten Abfrageschritt 59 überprüft, ob eine sensierte Durchflussgeschwindigkeit U eine untere Schwelle U₀ überschreitet. Ist dies nicht der Fall, arbeitet die Umwälzvorrichtung nicht ordnungsgemäß und es wird eine Warnfunktion W3 mit zugehöriger Kurznachricht SMS3 aktiviert. Überschreitet die sensierte Durchflussgeschwindigkeit U die untere Schwelle U₀, startet der Zeitgeber 13 mit der Messung eines Zeitintervalls, nach dessen Beendigung die Überprüfung wieder mit dem Abfrageschritt 57 beginnt.

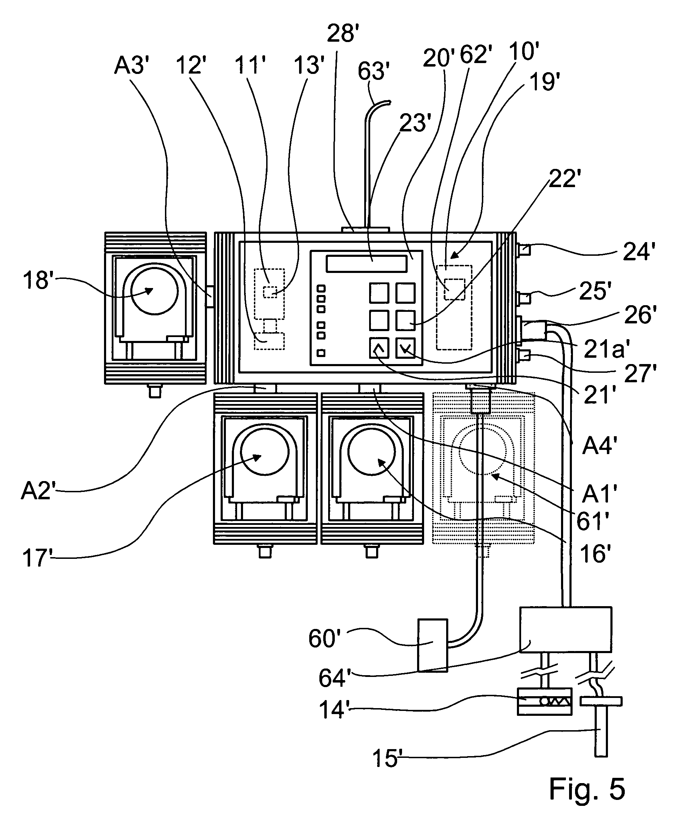

Figur 5 zeigt eine alternative Schwimmbadregelvorrichtung. Die wesentlichen gleichen Bauteile und gleichen Merkmale sind grundsätzlich mit den gleichen Bezugszeichen beziffert, wobei zur Unterscheidung der Ausführungsbeispiele ein Strich hinzugefügt sind. Ferner kann bezüglich gleich bleibender Merkmale und Funktionen auf die Beschreibung zu dem Ausführungsbeispiel in den Figuren 1 bis 4 verwiesen werden.

Eine Telekommunikationseinheit 10' mit einem GSM-Modem 62' ist in ein Zentralmodul 19' integriert, so dass die in Figur 2 dargestellten Schritte einer teilautomatisierten Konfiguration entfallen und nur das in Figur 3 dargestellte automatische Erkennen von Modulen in einem Konfigurationsprozess durchgeführt werden muss.

### Bezugszeichen

- 10: Telekommunikationseinheit
- 11: Recheneinheit
- 12: Speichereinheit
- 13: Zeitgeber
- 14: Sensoreinheit
- 15: Sensoreinheit
- 16: Dosierpumpe
- 17: Dosierpumpe
- 18: Dosierpumpe
- 19: Zentralmodul
- 20: Bedienfeld
- 21: Cursortaste
- 22: Eingabetaste
- 23: Display
- 24: Messanschluss
- 25: Messanschluss
- 26: Messanschluss
- 27: Videoanschluss
- 28: Schnittstelle
- 29: Abfrage
- 30: Konfiguration
- 31: Sprachwahl
- 32: Nummerneingabeschritt
- 33: Abfrageschritt
- 35: Fehlermeldung

- 36: Abfrageschritt
- 37: Abfrageschritt
- 38: Abfrageschritt
- 39: Fehlermeldung
- 40: Abfrageschritt
- 41: Schritt
- 42: Instanz
- 43: Fehlermeldung
- 44: Schritt
- 45: Schaltschritt
- 46: Schritt
- 47: Abfrageschritt
- 48: Schaltschritt
- 49: Instanz
- 50: Schaltschritt
- 51: Instanz
- 52: Schaltschritt
- 53: Instanz
- 54: Schaltschritt
- 55: Instanz
- 56: Schaltschritt
- 57: Abfrageschritt
- 58: Abfrageschritt
- 34: Abfrage
- 60: Brom-Modul
- 61: Flockungsmittelpumpe
- 62: Modem
- 63: Antennenkabel
- 64: Messmodul
- 65: Schritt
- U: Kenngröße
- 59: Abfrageschritt
- pH: pH-Wert
- y: Ja
- n: Nein
- A: Ausgang
- I: Zeitintervall
- SMS: Warnmeldung
- W: Warnfunktion

## Patentansprüche

1. Modulare Schwimmbadregelvorrichtung, insbesondere zum Messen und Regeln wenigstens einer Kenngröße (pH) für eine Wasserqualität eines Schwimmbads, **gekennzeichnet durch** wenigstens eine Telekommunikationseinheit (10, 10').

2. Modulare Schwimmbadregelvorrichtung nach Anspruch 1, **dadurch gekennzeichnet, dass** die Telekommunikationseinheit (10) als Modul ausgebildet ist.

3. Modulare Schwimmbadregelvorrichtung nach Anspruch 2, **gekennzeichnet durch** eine Recheneinheit (11), die zur zumindest teilautomatisierten Konfiguration bei einem Anbringen der Telekommunikationseinheit (10) vorgesehen ist.

4. Modulare Schwimmbadregelvorrichtung nach einem der vorhergehenden Ansprüche, **dadurch gekennzeichnet, dass** über die Telekommunikationseinheit (10, 10') wenigstens ein Messwert (pH) abfragbar ist.

5. Modulare Schwimmbadregelvorrichtung nach einem der vorhergehenden Ansprüche, **dadurch gekennzeichnet, dass** über die Telekommunikationseinheit (10, 10') wenigstens eine Betriebsgröße (pH') einstellbar ist.

6. Modulare Schwimmbadregelvorrichtung nach Anspruch 5, **dadurch gekennzeichnet, dass** über die Telekommunikationseinheit (10, 10') ein Betriebsmodus wählbar ist.

7. Modulare Schwimmbadregelvorrichtung nach einem der vorhergehenden Ansprüche, **gekennzeichnet durch** eine Speichereinheit (12), in die in wenigstens zwei Sprachen angelegte Datensätze gespeichert sind.

8. Modulare Schwimmbadregelvorrichtung nach einem der vorhergehenden Ansprüche, **gekennzeichnet durch** eine Recheneinheit (11), die eine Warnfunktion (W1, W2, W3) auslöst, wenn eine Kenngröße (pH, U) wenigstens einen Grenzwert über- oder unterschreitet.

9. Modulare Schwimmbadregelvorrichtung nach Anspruch 10, **gekennzeichnet durch** einen Zeitgeber (13) zum Bestimmen von Zeitintervallen (I), in denen bei ausgelöster Warnfunktion die Telekommunikationseinheit (10, 10') Warnmeldungen (SMS1, SMS2, SMS3) versendet.

10. Modulare Schwimmbadregelvorrichtung nach einem der vorhergehenden Ansprüche, **gekennzeichnet durch** eine Speichereinheit (12), die zum Speichern von wenigstens zwei Adressen und/oder Telefonnummern vorgesehen ist.

11. Modulare Schwimmbadregelvorrichtung nach einem der vorhergehenden Ansprüche, **dadurch gekennzeichnet, dass** die Telekommunikationseinheit (10, 10') zum Senden und Empfangen von SMS-Kurzmeldungen (SMS1, SMS2, SMS3) vorgesehen ist.

12. Modulare Schwimmbadregelvorrichtung nach einem der vorhergehenden Ansprüche, **gekennzeichnet durch** wenigstens eine Sensoreinheit (14), die zur Erfassung einer Kenngröße (U) eines Umwälzsystems vorgesehen ist.

13. Modulare Schwimmbadregelvorrichtung nach einem der vorhergehenden Ansprüche, **gekennzeichnet durch** wenigstens eine Sensoreinheit (15), die zur Erfassung einer Kenngröße eines Chemikalienvorrats vorgesehen ist.

14. Modulare Schwimmbadregelvorrichtung nach einem der vorhergehenden Ansprüche, **dadurch gekennzeichnet, dass** die Telekommunikationseinheit (10, 10') zum Übermitteln von Bildinformationen vorgesehen ist.

15. Telekommunikationseinheit (10) für eine modulare Schwimmbadregelvorrichtung nach einem der vorhergehenden Ansprüche.

16. Modulare Schwimmbadregelvorrichtung, insbesondere zum Messen und Regeln von Kenngrößen (pH) für eine Wasserqualität des Schwimmbads, **gekennzeichnet durch** eine Schnittstelle (28) für eine Telekommunikationseinheit (10) nach Anspruch 15.
